# FASCICULE DE BREVET EUROPEEN

(11) **EP 0 441 691 B1**
(45) Date de publication et mention de la délivrance du brevet: **13.10.1993**
(21) Numéro de dépôt: 91400258.9
(22) Date de dépôt: 04.02.1991
(51) Int. Cl.: F16B 37/04

(54) **Perfectionnements aux cages écrous pour fixations de type aveugle**
Mutternkäfige für die Blindbefestigung
Nut cages for blind fastening

(30) Priorité: 07.02.1990 FR 9001404
(43) Date de publication de la demande: 14.08.1991
(73) Titulaire: COMET, F-60300 Senlis (FR)
(72) Inventeur: Chrzastek, Bogdan, F-77400 Bussy st Georges (FR); Le Blaye, Gérard, F-93100 Montreuil (FR)
(74) Mandataire: Behaghel, Pierre

(56) Documents cités:
- DE-A- 2 255 094
- DE-A- 2 814 969
- FR-A- 2 375 480
- US-A- 4 077 300
- US-A- 4 521 148

## Description

L'invention est relative aux cages-écrous en matière plastique rendant possibles des fixations de type aveugle par vissage, c'est-à-dire agencées de façon à pouvoir être posées et fixées sur une tôle à partir de l'une des faces de cette tôle en vue de recevoir une vis se présentant du côté de cette même face, en raison de l'inaccessibilité de l'autre face due par exemple au fait que la tôle fait partie d'un caisson fermé au moins partiellement, comme il arrive fréquemment pour les carrosseries de véhicules.

Elle concerne plus particulièrement, parmi ces cages-écrous, celles qui sont susceptibles de coagir avec un trou carré percé dans la tôle de fixation et qui présentent la forme générale d'un godet étanche comprenant un fond raccordé successivement à une paroi latérale et à une collerette radiale, la paroi latérale présentant un contour extérieur carré et étant épaissie par au moins des nervures intérieures ne dégageant axialement qu'un passage plus étroit que les vis de fixation.

La mise en oeuvre d'une telle cage est la suivante.

On introduit la cage dans un trou carré de la tôle de fixation avec son fond en premier et jusqu'à application de sa collerette contre le bord du trou.

Pour monter une pièce quelconque sur la tôle, il suffit alors de faire traverser un trou de cette pièce par une vis appropriée, puis de visser à fond cette vis dans la cage ainsi mise en place.

Ladite vis creuse alors son filet dans la matière plastique de la cage et la légère expansion radiale qui en résulte de la cage bloque irréversiblement sur la tôle cette cage ainsi que la vis et que la pièce traversée par cette vis.

Dans les modes de réalisation connus des cages en question (voir le document US-A- 4 077 300) les quatre faces composant la paroi latérale de la cage sont identiques et l'immobilisation de la cage sur la tôle à la fin de sa course de mise en place est assurée par friction mutelle de ses faces contre les bords du trou carré, les dimensions de la cage étant choisies en fonction de celles du trou de façon qu'il n'y ait alors aucun jeu entre la cage et le trou.

L'irréversibilité du montage peut être renforcée par accrochage de la face inaccessible de la tôle, au niveau du bord du trou, sur de légères surépaisseurs de matière prévues sur les zones centrales des quatre faces de la cage, juste en deçà de leurs plages planes qui sont entourées par la tôle en fin de montage, le franchissement de ces surépaisseurs lors du montage exigeant de légères déformations radiales des faces considérées.

Mais ces surépaisseurs ont une très faible hauteur, de l'ordre de 0,2 mm, vu la faible déformabi- lité des faces considérées.

Il en résulte que l'accrochage des cages sur la tôle, tant avant qu'après vissage des vis correspondantes, est peu solide.

L'invention a pour but, surtout, d'augmenter la solidité de cet accrochage tout en facilitant le montage.

A cet effet, les cages-écrous selon l'invention sont essentiellement caractérisées en ce que deux de leurs faces latérales opposées comprennent chacune, venues de moulage avec elle, deux ailes présentant chacune la forme générale d'un triangle rectangle et raccordées à la zone centrale longitudinale de la face correspondante le long d'un côté de l'angle droit du triangle formant charnière de flexion, l'autre côté de l'angle droit s'étendant transversalement et étant propre à prendre appui contre la tôle en fin de montage et l'hypoténuse servant de rampe de glissement contre un bord de trou carré de fixation lors du montage de la cage sur la tôle perforée par ce trou, le contour général extérieur de la portion ailetée de la cage étant carré uniquement lorsque les ailes sont rabattues élastiquement contre les faces correspondantes de cette cage.

Dans des modes de réalisation préférés, on a recours en outre à l'une et/ou l'autre des dispositions suivantes :
- l'angle, de chaque aile, le plus éloigné du corps de la cage est écorné selon un segment de droite parallèle à la direction longitudinale de la cage,
- la section transversale de la paroi latérale continue de la cage, au niveau de sa portion ailetée, est rectangulaire, les deux faces qui portent les ailes étant plus grandes et plus rapprochées mutuellement que les deux autres.

L'invention comprend, mises à part ces dispositions principales, certaines autres dispositions qui s'utilisent de préférence en même temps et dont il sera plus explicitement question ci-après.

Dans ce qui suit, l'on va décrire un mode de réalisation préféré de l'invention en se référant au dessin ci-annexé d'une manière bien entendu non limitative.

La figure 1, de ce dessin, montre une cage-écrou établie selon l'invention en coupe transversale selon I-I, figure 3.

Les figures 2, 3 et 4 montrent la même cage-écrou, respectivement en coupe axiale selon II-II, figure 1, en vue de côté selon la flèche III, figure 1, et en vue de côté suivant la flèche IV, figure 1.

D'une façon connue en soi, la cage écrou considérée 1 présente la forme générale d'un godet étanche de forme symétrique par rapport à un axe central X et composé par un fond 2 raccordé successivement à une paroi latérale 3 et à une collerette radiale 4.

La paroi latérale 3, dont le contour extérieur est carré ou tout au moins inscriptible dans un carré, comprend deux portions s'étendant chacune sur la moitié de la longueur totale de la cage considérée selon son axe X, savoir une portion 5 en tronc de pyramide légèrement convergente vers le fond 2 et une portion prismatique 6 prolongeant la grande base de la portion 5.

Les quatre faces composant la portion pyramidale 5 sont identiques.

Mais la portion prismatique 6 présente en section transversale la forme générale d'un rectangle en ce sens que deux des faces 6₁ de cette portion sont relativement étroites et écartées l'une de l'autre alors que les deux autres faces 6₂ sont relativement larges et rapprochées, la portion pyramidale 5 adjacente étant raccordée extérieurement à ces dernières faces 6₂ par des ressauts transversaux rentrants 7.

Chacune des deux faces 6₂ comprend une nervure longitudinale centrale extérieure 8 qui est prolongée par deux ailes triangulaires 9 dont les plans forment entre eux un V largement ouvert, par exemple de l'ordre de 120 à 150°.

Les ailes 9 peuvent être rabattues élastiquement contre les faces 6₂ correspondantes et leur épaisseur est telle que, lorsqu'elles sont rabattues contre ces faces, elles sont inscrites dans le carré défini par les deux autres faces 6₁.

Le contour de chaque aile s'étend selon un triangle rectangle qui est raccordé à la nervure 8 selon un côté a de l'angle droit formant charnière, l'autre côté b de l'angle droit s'étendant transversalement, c'est-à-dire perpendiculairement à l'axe X, à une distance axiale, du bord de la collerette 4, sensiblement égale à l'épaisseur de la tôle de fixation 10 (voir figure 4).

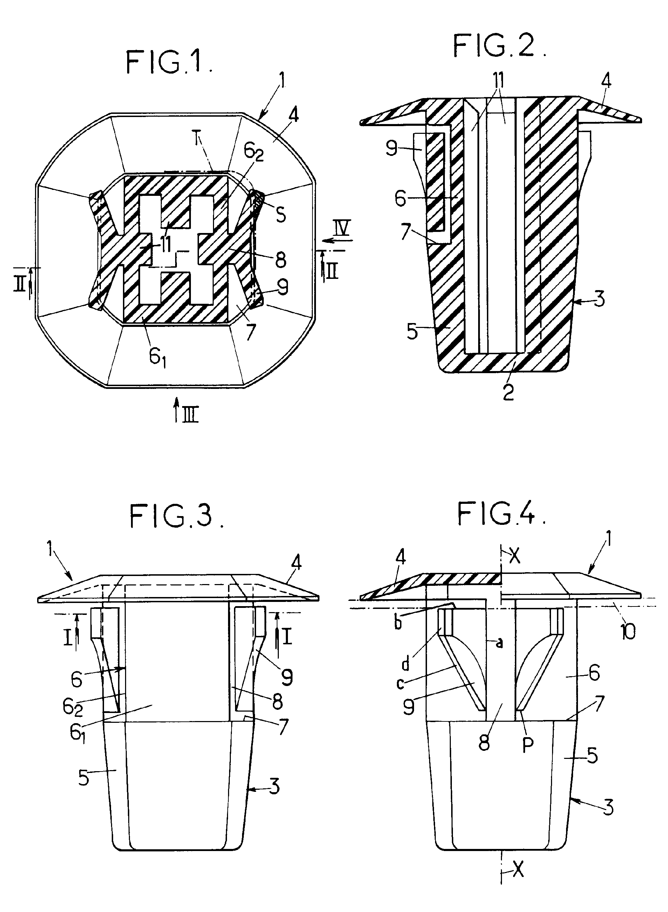

L'hypoténuse c du triangle rectangle considéré forme rampe de glissement oblique, propre à coopérer, lors du montage de la cage, avec le bord en regard du trou carré T (figure 1) dans lequel est introduite cette cage.

L'angle, de chaque triangle, opposé au côté-charnière longitudinal a, est avantageusement écorné selon un tronçon rectiligne d parallèle audit côté a.

La pointe P, de chaque aile triangulaire, opposée à son côté transversal b, est disposée du côté du fond 2 de la cage.

La collerette 4 est avantageusement constituée par un voile mince légèrement bombé recouvrant la cage à la façon d'une ombrelle, le bord de cette collerette étant propre à venir prendre appui élastiquement de façon étanche contre la tôle 10 à la fin du montage de la cage.

Le volume intérieur de la cage est tapissé par des nervures longitudinales 11 venues de moulage avec cette cage et faisant saillie radialement sur les quatre faces de celle-ci de façon à réserver axialement au centre de la cage un espace plus étroit que les vis à recevoir.

De la sorte, ces vis peuvent creuser leurs filets dans la matière constitutive desdites nervures, qui est une matière plastique telle que notamment une polyamide ou une résine acétal.

Les trous carrés T percés dans la tôle 10 pour recevoir les cages considérées présentent des dimensions qui sont seulement très peu supérieures à celles du contour carré de la portion prismatique 6 de chaque cage.

Pour effectuer le montage d'une cage dans un tel trou T, il suffit d'introduire la cage dans ce trou, parallèlement à son axe X, avec le fond 2 en avant.

Lorsque les ailes 9 viennent au contact avec les bords du trou en commençant par leurs pointes P, leurs tranches obliques c glissent le long de ces bords : ces ailes fléchissent donc progressivement de façon à s'escamoter suffisamment pour le passage de la cage, et ce jusqu'à ce que la collerette 4 vienne buter contre la tôle 10.

Les cotes de la cage sont telles qu'à cet instant les ailes 9 ont totalement traversé la tôle et se détendent transversalement derrière cette tôle en prenant solidement appui contre la face, de ladite tôle, inaccessible de l'extérieur.

Les portions S (figure 1) de ces ailes qui sont alors transversalement en saillie au-delà du carré délimitant le trou T prennent alors appui axialement contre la tôle en assurant un accrochage solide et irréversible de la cage sur cette tôle.

En suite de quoi et quel que soit le mode de réalisation adopté, on dispose finalement d'une cage-écrou dont la constitution, le montage et les avantages résultent suffisamment de ce qui précède.

Comme il va de soi, et comme il résulte d'ailleurs déjà de ce qui précède, l'invention ne se limite nullement à ceux de ses modes d'application et de réalisation qui ont été plus spécialement envisagés ; elle en embrasse, au contraire, toutes les variantes.

## Revendications

1. Cage-écrou en matière plastique pour fixation de type aveugle, propre à être montée dans un trou carré (T) d'une tôle (10) et à recevoir une vis creusant son filet dans elle, et présentant la forme générale d'un godet étanche comprenant un fond (2) raccordé successivement à quatre faces latérales et à une collerette radiale (4), caractérisée en ce que deux de ses faces latérales opposées (6₂) comprennent chacune, venues de moulage ave celle, deux ailes (9) présentant chacune la forme générale d'un triangle rectangle et raccordées à la zone centrale longitudinale de la face correspondante le long d'un côté (a) de l'angle droit du triangle formant charnière de flexion, l'autre côté (b) de l'angle droit s'étendant transversalement et étant propre à prendre appui contre la tôle (10) en fin de montage et l'hypoténuse (c) servant de rampe de glissement contre un bord du trou carré de fixation (T) lors du montage de la cage sur la tôle, le contour général extérieur de la portion ailetée de la cage étant carré uniquement lorsque les ailes sont rabattues élastiquement contre les faces correspondantes de cette cage.

2. Cage-écrou selon la revendication 1, caractérisée en ce que l'angle, de chaque aile, le plus éloigné du corps de la cage est écorné selon un segment de droite (d) parallèle à la direction longitudinale de la cage.

3. Cage-écrou selon l'une quelconque des précédentes revendications, caractérisée en ce que la section transversale de la paroi latérale continue de la cage, au niveau de sa portion ailetée, est rectangulaire, les deux faces (6₂) qui portent les ailes étant plus grandes et plus rapprochées mutuellement que les deux autres (6₁).

## Patentansprüche

1. Mutternkäfig aus Kunststoff, der in das quadratische Loch (T) eines Bleches (10) einsetzbar ist und eine Schraube aufnehmen kann, die ihr Gewinde in den Käfig einarbeitet und der die allgemeine Form eines dichten Napfes mit einem Boden (2) hat, an den sich nacheinander vier Seitenflächen und ein radialer Kragen (4) anschließen, dadurch gekennzeichnet, daß jede von zwei sich gegenüberliegenden Seitenflächen (6₂), zwei zusammen mit dieser geformte Flansche enthält, die die allgemeine Form eines rechtwinkligen Dreiecks haben und an dem mittleren Längsabschnitt der zugehörigen Fläche längs einer Seite (a) des rechten Winkels des Dreieckes verbunden sind, die ein biegsames Scharnier bildet, während sich die andere Seite (b) des rechten Winkels in Querrichtung erstreckt und sich am Ende der Montage an dem Blech (10) abstützen kann und die Hypotenuse (c) als Gleitrampe gegenüber einer Kante des quadratischen Befestigungsloches (T) während der Montage des Käfigs in dem Blech dient, wobei die allgemeine äußere Kontur des mit den Flanschen versehenen Abschnittes des Käfigs nur quadratisch ist, wenn die Flansche elastisch gegen die entsprechenden Oberflächen des Käfigs gebogen sind.

2. Mutternkäfig nach Anspruch 1, dadurch gekennzeichnet, daß der Winkel jedes Flansches, der am weitesten von dem Körper des Käfigs entfernt ist, längs einer Strecke (d) abgeschnitten ist, die parallel zur Längsrichtung des Käfigs verläuft.

3. Mutternkäfig nach einem der vorhergehenden Ansprüche, dadurch gekennzeichnet, daß der Querschnitt der durchgehenden Seitenwand des Käfigs in Höhe des mit Flanschen versehenen Abschnittes rechteckig ist, wobei die beiden Oberflächen (6₂), an denen die Flanschen sitzen, größer sind und einen geringeren Abstand voneinander haben als die beiden anderen Oberflächen (6₁).

## Claims

1. A screw grommet of plastic material for a blind fixing, adapted to be fitted in a square hole (T) in a plate (10) and receive a screw tapping its thread therein, and having the general shape of a sealed cup or bucket comprising a base (2) connected successively to four side surfaces and to a radial collar (4), characterised in that two of its opposite side surfaces (6₂) each comprise integrally therewith two flanges (9) each having the general shape of a right-angled triangle and connected to the central longitudinal zone of the corresponding face along a side (a) of the right-angle of the triangle forming a flexural hinge, the other side (b) of the right angle extending transversely and being adapted to bear against the plate (10) at the end of fitting and the hypotenuse (c) acting as a slideway against an edge of the square fixing hole (T) during the fitting of the grommet on the plate, the general external contour of the flanged portion of the grommet being square only when the flanges are folded elastically against the corresponding faces of said grommet.

2. A screw grommet according to claim 1, characterised in that the angle of each flange furthest away from the body of the grommet is chamfered along a segment of a straight line (d) parallel to the longitudinal direction of the grommet.

3. A screw grommet according to any one of the preceding claims, characterised in that the cross-section of the continuous side wall of the grommet at its flanged portion is rectangular, the two faces (6₂) which bear the flanges being larger and closer together than the other two (6₁).
